(19) Europäisches Patentamt
European Patent Office
Office européen des brevets

(11) **EP 1 249 273 B1**

(12) **EUROPEAN PATENT SPECIFICATION**

(45) Date of publication and mention
of the grant of the patent:
**03.11.2004 Bulletin 2004/45**

(51) Int Cl.7: **B01J 19/32**, B01D 53/14

(21) Application number: **02002081.4**

(22) Date of filing: **11.02.2002**

(54) **Method for manufacturing a gas-liquid contact plate**

Verfahren zur Herstellung einer Gas-Flüssigkeitskontaktplatte

Procédé de fabrication d'une plaque pour effectuer le contact gaz-liquide

(84) Designated Contracting States:
**DE DK FR GB IT**

(30) Priority: **11.04.2001 JP 2001112298**

(43) Date of publication of application:
**16.10.2002 Bulletin 2002/42**

(73) Proprietors:
• **THE KANSAI ELECTRIC POWER CO., INC.**
**Osaka-shi, Osaka 530-8270 (JP)**
• **Mitsubishi Heavy Industries, Ltd.**
**Tokyo (JP)**

(72) Inventors:
• **Mimura, Tomio,**
**The Kansai Electric Power Co., Inc.**
**Kita-ku, Osaka 530-8270 (JP)**
• **Nojo, Takashi,**
**The Kansai Electric Power Co., Inc.**
**Kita-ku, Osaka 530-8270 (JP)**
• **Yoshizumi, Naoyuki, Mitsubishi Heavy Ind., Ltd.**
**Chiyoda-ku, Tokyo (JP)**
• **Ohira, Hiroshi, Mitsubishi Heavy Ind., Ltd.**
**Chiyoda-ku, Tokyo (JP)**
• **Yoshiyama, Ryuji, Mitsubishi Heavy Ind., Ltd.**
**Nishi-ku, Hiroshima, Hiroshima-ken (JP)**
• **Iwasaki, Kenji, Mitsubishi Heavy Ind., Ltd.**
**Nishi-ku, Hiroshima, Hiroshima-ken (JP)**

(74) Representative: **HOFFMANN - EITLE**
**Patent- und Rechtsanwälte**
**Arabellastrasse 4**
**81925 München (DE)**

(56) References cited:
EP-A- 0 129 272          EP-A- 0 501 599
WO-A-97/44128           DE-A- 3 048 303
US-A- 3 466 019

## Description

### Field of the Invention

The present invention relates to a gas-liquid contact plate used for absorbing a gas into a liquid and, more particularly, to a gas-liquid contact plate and a gas-liquid contactor that enable efficient absorption by dramatically increasing a gas-liquid contact area.

### Background of the Invention

Gas-liquid contact plates are provided in the plural number in an absorption tower (gas-liquid contactor) mainly in a chemical plant etc., and are used to efficiently absorb-components in a gas such as carbon dioxide discharged from the chemical plant into an absorbing solution. The gas-liquid contact in the absorption tower is accomplished by causing a liquid containing an absorbent (absorbing solution) to flow down from the upper part and by introducing a gas containing components to be absorbed from the lower part. At this time, as the liquid-gas contact area increases, the components in the gas can be absorbed in high yields. Therefore, it is to be desired that the gas-liquid contact plate has a shape such that the liquid-gas contact area is increased. For this reason, there has been used a method in which a gas is introduced from the lower part while a liquid is allowed to flow down as wide as possible from the upper part. In such a gas absorbing method using gas-liquid contact, it is necessary to increase the wettability of plate surface of the gas-liquid contact plate.

Generally, packing provided in the absorption tower is broadly divided into two types: regular packing and irregular packing.

The regular packing, which is packed in the absorption tower as a medium for gas-liquid contact, has a construction such that gas-liquid contact plates produced by fabricating a sheet metal or a wire net into various shapes are laminated regularly. During the operation of the absorption tower, a liquid film is formed on the surface of packing (gas-liquid contact plate) by a reactant solution supplied from the upper part of the tower. The irregular packing, which is packed in the absorption tower as a medium for gas-liquid contact in the same manner as the regular packing, has a construction such that gas-liquid contact members fabricated into various shapes, such as ring-shaped chains, are arranged at random.

In recent years, there has been developed the regular packing using a "parallel wet wall system" having a far lower pressure loss than that of the conventional packing. A feature of this regular packing is that the gas-liquid contact plates are arranged in parallel longitudinally in contrast to the conventional regular packing, by which the pressure loss can be decreased, and the effective surface area can be increased. For such regular packing of the parallel wet wall system, it is preferable that the liquid spreads as wide as possible because the absorbing performance depends on the total surface area of liquid film.

As a gas-liquid contact plate used as the packing, a multi-layer plate in which plain woven wire nets are joined on both faces of a flat plate by the sintering process has been used, and it is known that high wettability is achieved by the gas-liquid contact plate in which the wire nets are joined to the flat plate.

However, although the gas-liquid contactor using the above-described regular packing has high wettability, it is disadvantageous in terms of cost because of the need for a process in which a plurality of layers are produced and then lapped. Also, since the gas-liquid contact plate consists of a plurality of lapped layers, such a contact plate has a heavy weight, and thus the weight and size of the absorption tower body increase in the case where a plurality of contact plates are arranged.

Furthermore, since the gas and liquid are shut off completely by the surface and the back surface of plate, a difference in contact efficiency is liable to arise between a location in which the gas or liquid is easy to flow and a location in which it is difficult to flow on each contact plate in the absorption tower. Therefore, there is a certain limit in increasing the contact efficiency as a whole.

GB 1 569 828 A describes a packing member for use in mass transfer columns having plates made of metal which are formed with inclined corrugations. It is considered to be advantageous for the total perforate area of a plate to be of the order of from 5% to 20% of the imperforate plate area to proved an adequately large wetted surface on which effective mass transfer depends.

US 3,466,019 describes packing sheets for gas-liquid contactors and their production method. The packing sheets are stamped, moulded or pressed from a thin sheet of material and the assemblies of packing elements are arranged so that a gas can flow between the sheets.

EP 0 129 272 A1 describes a device and a method for producing gas-liquid-contact elements. Such a contact element has the shape of a plurality of zigzag shape strips extending vertically side by side. The adjacent strips are relatively shifted over half the distance between two adjacent crests directed towards the same side. The strips are connected with the crests alternately with the opposite partition plate so that the annulated structure is sandwiched between two partition plates. A contact element can be made from a flat sheet which is fed between two opposite gear wheels which depress each time a zigzag shaped strip.

The structured packings described in WO97/44128 are typically manufactured starting from flat sheet metal supplied in a coil. The flat sheet metal is first perforated by punching holes in it. Then, any surface texture is applied by stamping or rolling. Corrugations of the required form are then formed by pressing the sheet between a shaper tool and die. One or more corrugations may be form at time. Before superposing corrugated sheets to form blocks, the continuous corrugated sheet is cut into appropriate lengths, preferably by sawing or grinding. Alternatively, the sheet may be cut with a guillotine provided that care is taken not to distort the corrugations near the edge of the sheet. WO97/44128 represents the closest prior art.

Summary of the Invention

In view of the above problems, the inventors conducted studies to develop a gas-liquid contact plate that has high wettability, is capable of improving the gas-liquid contact efficiency, and is light in weight and advantageous in terms of manufacturing cost.

The problem underlying the invention is to propose a manufacturing method which is simple and leads to a highly efficient gas-liquid plate.

This object is solved by manufacturing method with the features of claim 1.

As the result, the inventors found that the above-described problems can be solved by manufacturing a thin plate with a roughened surface having a particular shape. The thin plate is manufactured by pressing one flat plate to improve wettability without the use of a multi-layer construction using a flat plate and wire nets.

The present invention provides a method to manufacture a gas-liquid contact plate in which a plurality of straight rows are provided; irregularities are formed over both surfaces of the plate at equal intervals in the row; the adjacent rows have repeated irregularities opposite to each other; and in a peak or valley portion of the irregularities, there is formed an opening connecting the surface to the back surface between the adjacent rows. In this gas-liquid contact plate, wavy irregularities are formed over both surfaces of the plate at equal intervals in the row, and the wavy irregularities of the adjacent rows have a substantially opposite phase at an equal period. Also, it is preferable from the viewpoint of decreased distortion that one or two or more flat plate portions without irregularities are formed almost perpendicularly to the straight rows.

Such a gas-liquid contact plate is used in a gas-liquid contactor in which the gas-liquid contact plates are provided substantially in parallel with the flow of a gas, and a liquid supplied from the upper part toward the lower part flows down along the surface of the gas-liquid contact plate and comes into contact with the gas supplied from the lower part. In this gas-liquid contactor, a mode is preferable in which the gas is an exhaust gas containing carbon dioxide; the liquid is a carbon dioxide absorbing solution; and carbon dioxide in the exhaust gas is absorbed and removed by the contact of the exhaust gas with the carbon dioxide absorbing solution.

For the gas-liquid contact plate manufactured in accordance with the present invention, since holes are formed in the transverse direction perpendicular to the liquid flow, the liquid flows while spreading not only in the longitudinal direction but also in the transverse direction. Since the gas as well as the liquid flows in the transverse direction and is mixed with each other, the gas flow can also go freely onto the surface and the back surface of plate, unlike the case where the conventional flat plate or the multilayer plate is used. Thus, in such a gas-liquid contact plate, the gas-liquid contact efficiency can be improved significantly by two actions: the capillary phenomenon of the flowing-down liquid and the flow of gas flowing on the surface and the back surface through the openings.

In the case where a plurality of plate-shaped members are provided in an absorption tower, for a conventional plate-shaped member without openings, since the gas does not flow through the surface and the back surface, unless the liquid and gas are supplied by paying attention to each layer divided by the plate-shaped member, a difference in contact efficiency etc. between layers in the longitudinal direction may arise, and thus it is sometimes difficult to obtain a sufficient gas absorption efficiency as a whole.

If the gas-liquid contact plate manufactured in accordance with the present invention is used, since the gas flows freely through the surface and the back surface of each contact plate, the gas does not stay in each layer divided by the plate. Therefore, a chance of substantially uniform gas-liquid contact is afforded on each contact plate, so that the operation can be provided so as to improve the gas absorption efficiency of the whole of the absorption tower. Also, excessive attention need not be paid to the uniform supply of gas into the tower, and the operation of the tower can be performed easily.

As described above, the present gas-liquid contact plate is characterized by a low load on equipment and being advantageous in terms of manufacturing cost because it has high wettability, being capable of improving the gas-liquid contact efficiency, and is light in weight.

## Brief Description of the Drawings

Fig. 1 is a view schematically showing a gas-liquid contact plate manufactured in accordance with the present invention, FIG. 1(a) being a front view, FIG. 1(b) being a plan view, FIG. 1(c) being a side view, and FIG. 1(d) being a sectional view taken along the line A-A of FIG. 1(c).

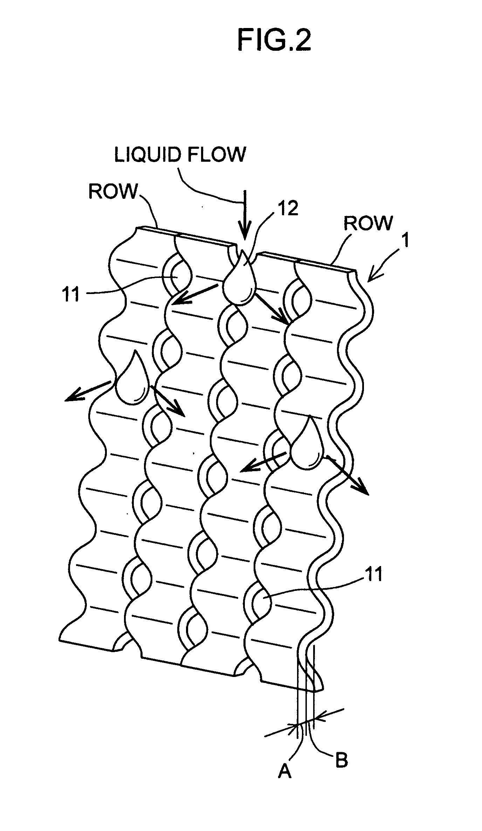

FIG. 2 is a schematic view showing the flow of a liquid in a case where the gas-liquid contact plate manufactured in accordance with the present invention is used, in which A denotes a plate thickness, and B denotes a width from the centerline.

FIG. 3 is a schematic view of press dies capable of being used when the gas-liquid contact plate in accordance with the method of the present invention is manufactured.

FIG. 4 is a configuration view showing one example of absorption tower in which the present gas-liquid contact plate in accordance with the present invention is incorporated.

FIG. 5 is a configuration view schematically showing laboratory packing performance evaluation test equipment used in example 3.

The reference numerals shown in these figures are defined as follows: 1, gas-liquid contact plate; 2,liquid supply port; 3,support member; 4,gas supply port; 5,liquid reservoir; 10, absorption tower; 11, opening; 12,liquid drop; 20, press die teeth; 21, press die; 30,absorption tower; 31,packing; 32,humidifier; 33,tank for used absorbing solution; 34,tank for fresh absorbing solution; 35,heat exchanger; 36,heat exchanger.

## Detailed Description of the Invention

An embodiment for carrying out a decarburizing method will be described in detail.

For a gas-liquid contact plate, the wettability is high in the case where the contact plate is a perforated plate with a plurality of holes formed therein. For example, if the plate thickness is about 0.3 mm, it is preferable that the optimum hole diameter be 0.5 mm and the rate of hole area be about 23%. It is thought that many small-diameter holes provide a function of accelerating liquid wetting. However, in order to manufacture a simple perforated plate, the plate must be manufactured by regularly punching out holes with a diameter of about 0.5 mm by using, for example, a precision-made pin. Such a process is not easy to perform, and the completed perforated plate is high in cost.

Also, the plate having square grooves of a checkered form has high wettability, and for example, for the plate with a thickness of about 3 mm, square grooves of about 1 mm in depth and 1 mm in width are best suitable.

The present invention provides a gas-liquid contact plate that has construction and operation having any of the above-described features, and thus can improve the gas-liquid contact efficiency while having greater wettability.

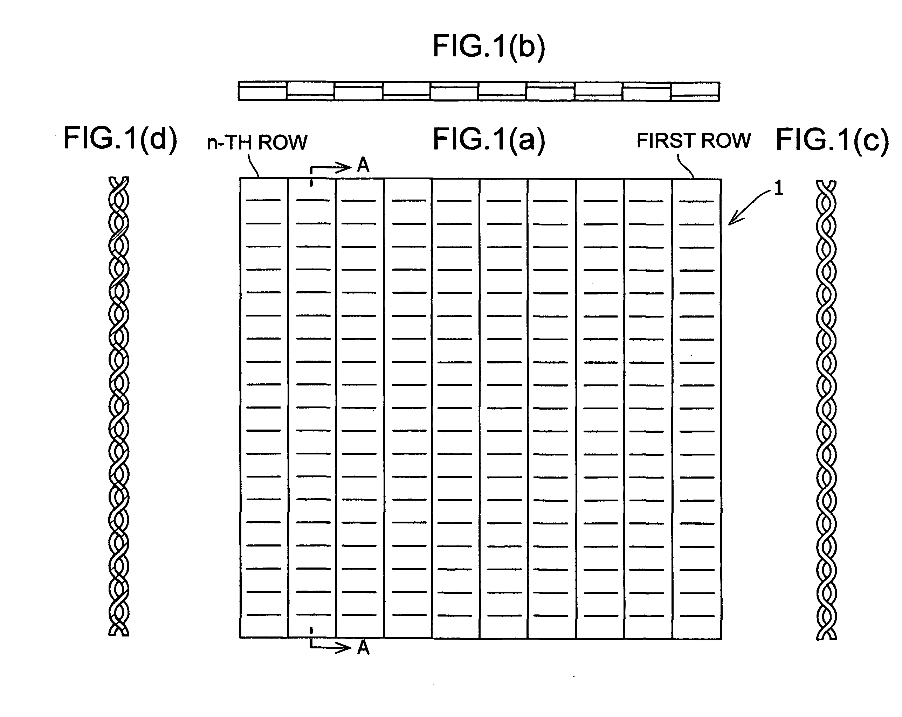

As shown in FIG. 1(a), a gas-liquid contact plate 1 in accordance with the present invention is provided with a plurality of straight rows along the flow direction of the whole liquid from the upper part to the lower part. In FIG. 1, FIG. 1(a) is a front view, FIG. 1(b) is plan view in which the contact plate 1 is viewed from the upside in the direction in which a liquid is allowed to flow, and FIG. 1(c) is a side view. As shown in the side view of FIG. 1(c), wavy irregularities are formed over both surfaces of the plate at the equal intervals, and the adjacent rows have repeated irregularities opposite to each other. Since wavy irregularities are formed in this embodiment, a substantially opposite phase is formed at the equal period. In a peak or valley portion of irregularities, there is formed an opening 11 connecting the surface to the back surface between the adjacent rows.

Next, a manufacturing method for the gas-liquid contact plate in accordance with the present invention will be described.

A general embossed flat plate is characterized in that the irregularities have roundness or one irregularity is relatively large. Therefore, when the gas-liquid contact plate having the above-described characteristics is manufactured by an ordinary embossing operation, it is difficult to provide sufficient wettability. As a preferred manufacturing method, a method in which a flat plate is subjected to a particular pressing operation is used. With this method, a thin plate having the above-described characteristics as well as high wettability can be manufactured easily.

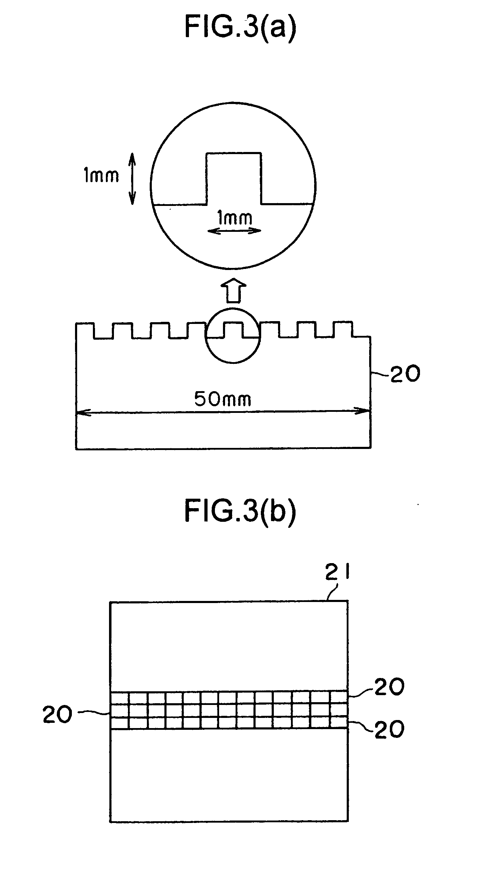

In accordance with the present invention, the gas-liquid contact plate can be manufactured by one pressing operation using male and female press dies 21 with a plurality of teeth 20 arranged as shown in FIG. 3(a), for example. A generally used planar die has difficulty in performing fabrication of irregularities with small holes, fine fabrication, or fabrication of square groove shape. Therefore, the pressing operation is performed by using a die in which, for example, the end portion of a die material with a thickness of about 1 mm is fabricated so as to have irregularities, and the materials are laminated alternately. Thereby, openings 11 (through holes) can be formed at intervals of about 1 mm, and a plain woven wire net shaped pattern of about 1 mm unit is reproduced on the surface and the back surface, and at the same time, the grooves of a checkered form are provided.

When the gas-liquid contact plate is manufactured in accordance with the present invention by pressing, a contact plate having all of these features can be obtained by one pressing operation. In this case, the manufacturing process is simplified, and this manufacturing method is also advantageous in terms of cost.

When the gas-liquid contact plate in accordance with the present invention is manufactured by forming openings by pressing, a plate material used is not subject to any special restriction, and any plate material for fabrication can be used widely. Also, when the contact plate is manufactured by pressing, the rate of hole area is about 10 to 20%, so that a rate of hole area enough to provide high wettability can be kept.

The gas-liquid contact plate being manufactured by pressing in this manner has high wettability equivalent to that of the conventional gas-liquid contact plate (40 mm → 40 mm). Compared with the case where a multi-layer plate is manufactured, the cost can be reduced significantly. Also, compared with the case of a multi-layer plate using wire nets (4.2 kg/m$^2$), the weight can be decreased significantly (about 2.4 kg/m$^2$).

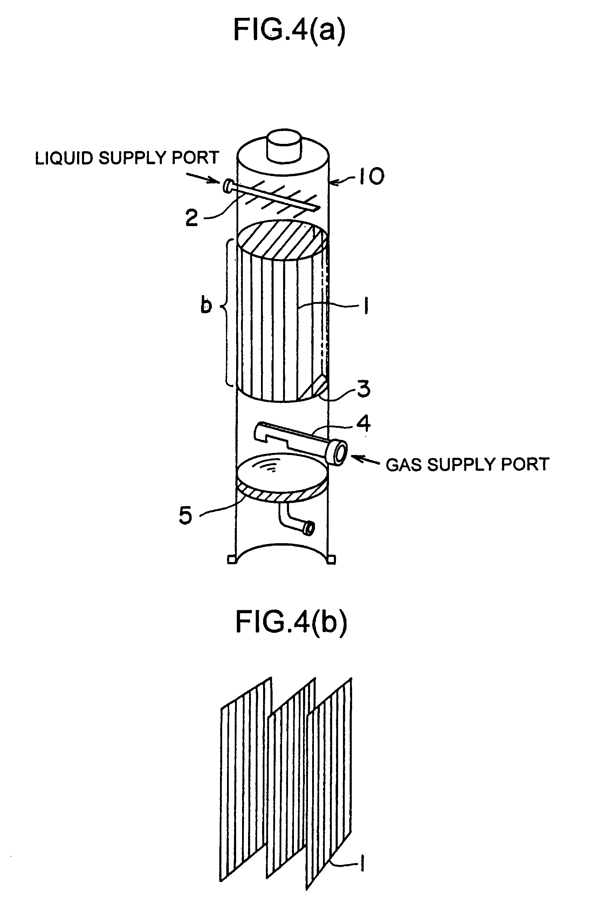

The gas-liquid contact plate manufactured in accordance with the present invention can be disposed in an absorption tower 10 as shown in FIG. 4(a). In the absorption tower 10, the gas-liquid contact plates 1 are arranged in the plural number in parallel longitudinally on a support member 3 along the flow direction of gas and liquid. The gas flows toward the upper part through a gas supply port 4, and comes out of the tower through a gas discharge port at the uppermost part. On the other hand, the liquid is allowed to flow down toward the lower part of tower through a liquid supply port 2 provided at the upper part of the absorption tower. In the gas-liquid contactor portion shown in FIG. 4(b), the liquid flows down from the upper part to the lower part along the surface and the back surface. In FIG. 4(b), the gas-liquid contact plates are arranged in parallel. In this portion, the liquid flowing down along the surface comes into contact effectively with the gas flowing from the lower part to the uppermost part.

The size of the gas-liquid contact plate is not subject to any special restriction, and can be determined arbitrarily according to the size, shape, installation location, etc. of the absorption tower used.

Also, in the longitudinal direction, which is the flow direction of liquid, non-pressed portions which are not pressed can be provided at fixed intervals or at any intervals. Thereby, distortion of the gas-liquid contact plate itself can be decreased, so that the durability of plate can be enhanced. At this time, the wettability is not deteriorated by the non-pressed portions.

Usually, as the size of the die increases, a forming error caused by pressing operation is more liable to occur. Therefore, if the pressed portion formed by one pressing operation is too large, openings to be penetrated may be closed, the openings may become insufficient, or other troubles may occur.

Thereupon, for the gas-liquid contact plate, a mode is preferable in which in the shape of contact plate that is long in the longitudinal direction in which the liquid flows, two to five flat plate portions without irregularities are formed almost perpendicularly to the straight rows.

According to the present invention, there can be provided a gas-liquid contact plate that has high wettability, is capable of improving the gas-liquid contact efficiency, and is light in weight and advantageous in terms of manufacturing cost.

The gas-liquid contact plate has high wettability equivalent to that of the conventional gas-liquid contact plate. Also, for the gas-liquid contact plate, the manufacturing process is simplified, and thus the cost can be reduced greatly as compared with a multi-layer plate using wire nets. Further, since the flat plate can be manufactured by pressing, the weight can be decreased greatly as compared with the multi-layer plate.

If the gas-liquid contact plate is used in an absorption tower, the absorbing performance of the absorption tower can be increased remarkably.

The following is a description of the present invention in more detail with reference to examples, and the present invention is not limited to these examples.

## Example 1 (wetting test)

A comparison experiment was conducted on a rectangular specimen with a length in the liquid flow direction of D mm by using a gas-liquid contact plate of the present invention having openings (a) and a gas-liquid contact plate having the same shape except that the openings were not formed (b).

For the contact plate without transverse openings (b), the liquid dropped downward so as to slide on one surface having protrusions, so that wetting did not spread. The width of liquid at a position D mm distant from the first one drop was d mm.

Contrarily, for the present gas-liquid contact plate having the openings (a), since holes were formed in the transverse direction, the liquid could move slantwise from a space formed in the adjacent rows to the opposite-side surface, so that wetting spread. The width of liquid at a position D mm distant from the first one drop was in the range of 5·d to 10·d mm.

**Example 2 (wetting test)**

For a gas-liquid contact plate in which a flat plate was subjected to electrolytic surface roughing treatment (c), even if the liquid was allowed to flow down a distance of 50mm, the wetting spread was 8 mm. For a multi-layer plate in which wire nets were joined to the surface of flat plate (d), when the liquid was allowed to flow down a distance of 50 mm, the wetting spread was about 35 mm.

Contrarily, for the gas-liquid contact plate in which a flat plate was pressed (e), when the liquid was allowed to flow down a distance of 50 mm, the wetting spread was about 45 mm, and the wetting area of the whole surface increased significantly.

**Example 3**

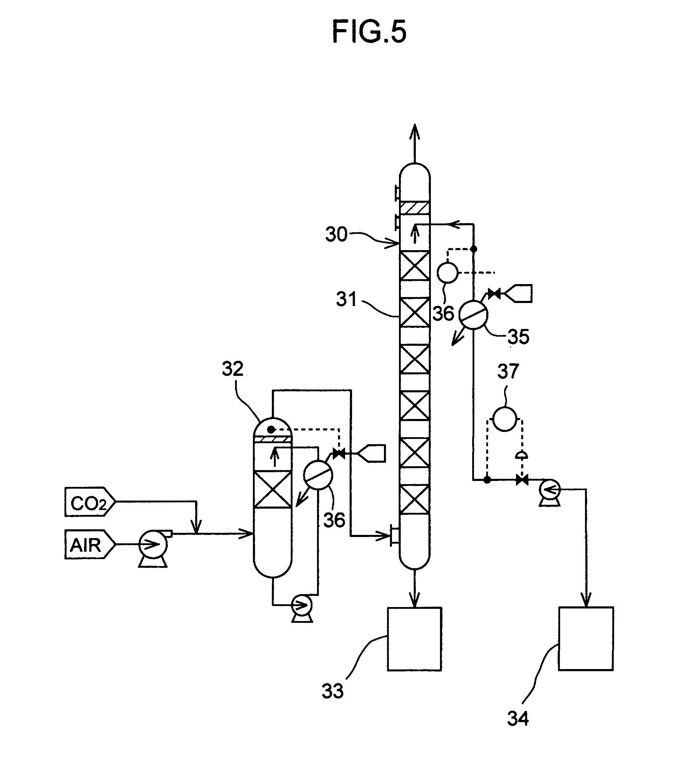

The packing that was finished into a packing construction having a columnar shape 100 mm in diameter and 750 mm long by arranging the gas-liquid contact plates of the present invention in parallel at fixed intervals was arranged at six places in laboratory packing performance evaluation test equipment shown in FIG. 5. A dummy exhaust gas containing a 10% concentration of $CO_2$ was introduced into a packed tower from the lower part thereof, and was brought into contact with an absorbing solution supplied from above the packing, then being discharged from the upper part of the packed tower. The performance of packing was represented by $CO_2$ absorption factor, and the $CO_2$ absorption factor was determined from Equation (1) by measuring the $CO_2$ concentration of the inlet and outlet gases of the packed tower by using a $CO_2$ analyzer.

Same tests were conducted three times. Table 1 gives the average $CO_2$ absorption factor together with the test conditions.

$$CO_2 \text{ absorption factor} = [(Cin-Cout)/(Cin(1-Cout))]$$

$$x\ 100 \tag{1}$$

[In Equation (1), Cin denotes inlet $CO_2$ concentration, and Cout denotes outlet $CO_2$ concentration]

Table 1

| Test condition | | | | Test result |
|---|---|---|---|---|
| Inlet $CO_2$ Concentration (%) | Liquid-gas Ratio (l/m$^3$) | Inlet gas Temperature (°C) | Inlet liquid temperature (°C) | $CO_2$ absorption factor (%) |
| 10.4 | 1.75 | 46 | 38 | 92.4 |

**Comparative example 1**

The performance of packing that was finished into a packing construction using the gas-liquid contact plate of the present invention shown in example 3 (hereinafter referred to as K1) was compared with the performance of packing that was finished into a packing construction having a columnar shape using a gas-liquid contact plate, which was a multi-layer plate produced by joining plain woven wire nets to both surfaces of a conventional flat plate by the sintering process (hereinafter referred to as K2). For this purpose, K2 was packed in the test equipment shown in FIG. 5, and a test was conducted under the same test conditions as those in example 3, by which the $CO_2$ absorption factor was measured.

**Comparative example 2**

In order to compare the performance of K1 using the gas-liquid contact plate manufactured according to the present invention with the performance of commercially available regular packing, the commercially available product of the same volume as that of K1 was packed in the test equipment shown in FIG. 5, and the performance was evaluated under the same test conditions as those in example 3.

As the result, the $CO_2$ absorption factor was 85.6%.

**EP 1 249 273 B1**

From the results of the above-described example 3 and comparative examples 1 and 2, it was revealed that K1 of the present invention has $CO_2$ absorbing performance equal to or higher than that of conventional K2. Also, it was also found that since K1 using the gas-liquid contact plate of the present invention is light in weight and low in cost, it is advantageous to change conventional K2 to K1. Further, it was made clear that K1 of the present invention has considerably higher $CO_2$ absorbing performance than the conventional packing used in the actual equipment. Therefore, it was found that if K1 of the present invention is used, the packing volume decreases as compared with the conventional packing, so that K1 also has a merit as compared with the commercially available product.

## Claims

1.  A manufacturing method for a gas-liquid contact plate in which a plurality of straight rows having a longitudinal direction and a transverse direction are provided; irregularities are formed over both surfaces of the plate at equal intervals in said rows; the adjacent rows have repeated irregularities opposite to each other; and in a peak or valley portion of said irregularities, there is formed an opening connecting the surface to the back surface between the adjacent rows,
    wherein the method is performed by subjecting a flat plate to one pressing operation; and
    male and female press dies with a plurality of teeth arranged on the end portion of said dies are used; said openings are formed at intervals in the transverse direction by the pressing operation so that the rate of hole area of said openings is 10-20%.

2.  The manufacturing method for the gas-liquid contact plate according to claim 1, wherein wavy irregularities are formed over both surfaces of the plate at equal intervals in said row, and said wavy irregularities of the adjacent rows have a substantially opposite phase at the equal period.

3.  The manufacturing method for the gas-liquid contact plate according to claim 1 or 2, wherein one or two or more flat plate portions without irregularities are formed almost perpendicularly to said straight rows.

## Patentansprüche

1.  Verfahren zur Herstellung einer Gas-Flüssigkeits-Kontaktplatte, in der eine Vielzahl von geraden Reihen mit Längsrichtung und Transversal-Richtung vorgesehen sind; Ungleichmäßigkeiten über beide Oberflächen der Platte mit gleichen Abständen in den Reihen ausgeformt sind; die benachbarten Reihen sich wiederholende einander gegenüberstehende Ungleichheiten aufweisen; und in einem Spitzen- oder Talabschnitt der Ungleichmäßigkeiten eine Öffnung ausgeformt ist, die die Oberfläche mit der rückwärtigen Oberfläche zwischen den benachbarten Reihen verbindet,
    wobei das Verfahren durch Durchführen eines Pressschritts an einer flachen Platte ausgeführt wird; und
    männliche und weibliche Presswerkzeuge mit einer Vielzahl von Zähnen, die an dem Endabschnitt der Werkzeuge angeordnet sind, verwendet werden; die Öffnungen in Abständen in Transversal Richtung durch das Pressen derart ausgeformt werden, dass der Anteil des Lochbereichs der Öffnungen 10 bis 20% beträgt.

2.  Verfahren zum Herstellen der Gas-Flüssigkeits-Kontaktplatte gemäß Anspruch 1, wobei wellenförmige Ungleichmäßigkeiten über beide Oberflächen der Platte in gleichen Abständen in der Reihe ausgeformt werden, und wobei die wellenförmigen Ungleichmäßigkeiten der benachbarten Reihen eine im wesentlichen gegenüberliegende Phase mit gleicher Periode aufweisen.

3.  Verfahren zum Herstellen der Gas-Flüssigkeits-Kontaktplatte gemäß Anspruch 1 oder 2, wobei eine oder zwei oder mehr flache Plattenabschnitte ohne Ungleichmäßigkeiten nahezu senkrecht zu den geraden Reihen ausgeformt sind.

## Revendications

1.  Procédé de fabrication d'une plaque pour effectuer le contact gaz/liquide dans laquelle on fournit une pluralité de rangées droites ayant une direction longitudinale et une direction transverse ; on forme des irrégularités sur les deux surfaces de la plaque à des intervalles égaux dans lesdites rangées ; les rangées adjacentes ont des irrégularités répétées opposées les unes aux autres ; et dans une partie de pic ou de vallée des dites irrégularités,

7

on forme une ouverture reliant la surface à la surface arrière entre les rangées adjacentes,
dans lequel le procédé est réalisé en soumettant une plaque plate à une opération de pression ; et
on utilise des matrices de presse mâle et femelle avec une pluralité de dents disposées sur la partie d'extrémité desdites matrices ; lesdites ouvertures sont formées à des intervalles dans la direction transverse au moyen d'une opération de pression de telle façon que le taux de surface du trou desdites ouvertures soit de 10 à 20%.

2. Procédé de fabrication d'une plaque pour effectuer le contact gaz/liquide selon la revendication 1, dans lequel on forme des irrégularités ondulées sur les deux surfaces de la plaque à des intervalles égaux dans lesdites rangées, et lesdites irrégularités ondulées des rangées adjacentes ont des phases sensiblement opposées à égalité de période.

3. Procédé de fabrication d'une plaque pour effectuer le contact gaz/liquide selon la revendication 1 ou 2, dans lequel on forme un ou deux ou plusieurs parties de plaque plate sans irrégularités de façon presque perpendiculaire auxdites rangées droites.

## FIG.1(b)

## FIG.1(d)  n-TH ROW    FIG.1(a)    FIRST ROW  FIG.1(c)

→A

→A

1

EP 1 249 273 B1

# FIG.2

# FIG.3(a)

# FIG.3(b)

# FIG.4(a)

LIQUID SUPPLY PORT

10

2

b

1

3

4

GAS SUPPLY PORT

5

# FIG.4(b)

1

# FIG.5